# EUROPÄISCHE PATENTSCHRIFT

(11) **EP 2 652 289 B1**
(45) Veröffentlichungstag und Bekanntmachung des Hinweises auf die Patenterteilung: **01.12.2021**
(21) Anmeldenummer: 11805772.8
(22) Anmeldetag: 15.12.2011
(51) Int. Cl.: F02B 77/08, F02F 3/00, G01K 1/02, G01K 11/26

(54) **KOLBENTEMPERATURMESSUNG MIT HILFE VON SAW-SENSOREN**
PISTON TEMPERATURE MEASUREMENT BY MEANS OF SAW SENSORS
MESURE DE LA TEMPÉRATURE DE PISTONS AU MOYEN DE CAPTEURS SAW

(30) Priorität: 16.12.2010 DE 102010054825
(43) Veröffentlichungstag der Anmeldung: 23.10.2013
(73) Patentinhaber: DEUTZ Aktiengesellschaft, 51149 Köln (DE)
(72) Erfinder: PLUM, Thomas, 53123 Bonn (DE); LOTFI, André, 50933 Köln (DE); STEPPAT, Harald, 53426 Schalkenbach (DE); RÖBEL, Michael, 50170 Kerpen (DE)
(86) Internationale Anmeldenummer: PCT/EP2011/006329
(87) Internationale Veröffentlichungsnummer: WO 2012/079759

(56) Entgegenhaltungen:
- DE-A1- 19 919 843
- JP-A- 8 278 205
- US-A1- 2005 174 255
- US-A1- 2007 051 176
- LEONHARD M REINDL: "SAW-Based Radio Tag and Sensor Systems", PROCEEDINGS INTERNATIONAL CONFERENCE ON NEW PIEZOELECTRIC MATERIALS AND HIGH PERFORMANCE ACOUSTIC WAVE DEVICES,, 28 January 2002 (2002-01-28), pages 71-78, XP002593134,

## Beschreibung

Die Erfindung betrifft ein Verfahren und eine Vorrichtung zur Kolbentemperaturmessung mit Hilfe von SAW (surface acoustic wave oder auch akustische Oberflächenwelle) -Sensoren. Es ist ein Verfahren zur Messung von Temperaturen an Kolben, wie sie z. B. bei einem Verbrennungsmotor eingesetzt werden. Hierbei werden spezielle Sensoren eingesetzt, welche auf dem Prinzip der Akustik Oberflächenwellen, engl. surface acoustic waves kurz SAW, arbeiten.

Die Kolben sind ein wichtiger Bestandteil von Verbrennungsmotoren. Da die Kolben an der Kolbenoberfläche direkt dem innermotorischen Brennvorgang ausgesetzt sind, ist ihre Belastung hoch, sowohl was die thermische Belastung als auch die Belastung durch die Krafteinwirkung angeht.

Für die Wahl eines geeigneten Kolbens spielt nicht nur die Geometrie eine wichtige Rolle, sondern auch das zu verwendende Material wie z. B. Aluminium oder Stahl. Zur Ermittlung der Temperaturverteilung auf dem Kolben ist es notwendig, diese zu messen. Gemessen werden die Temperaturen an verschiedenen Stellen am und im Kolben während des Betriebs. Die Verwendung bezogener Lastpunkte oder dynamischer Lastkurven ermöglicht eine passende Auslegung des Kolbens und ermöglicht die Auswahl der zu verwendenden Kolbenmaterialien.

Derzeit existieren drei etablierte Verfahren und ein veraltetes Verfahren zum Messen der Kolbentemperaturen.

### Die Messung mit Hilfe von thermischen Markern

Hierbei werden Marker angebracht, welche ihre Eigenschaften unter Einwirkung von bestimmten Grenztemperaturen verändern. Dieses Verfahren kann angewendet werden, um sicherzustellen, dass Grenztemperaturen erreicht oder überschritten werden. Das Verfahren liefert keine Aussagen über eine zeitlichen Auflösung.

### Tauchspulenverfahren

Beim Tauchspulenverfahren wird das Prinzip der Induktion verwendet. Hierbei taucht eine Spule in eine andere ein und ermöglicht mittels Induktion die Ubertragung der Messdaten, siehe z.B. die JP8278205 A oder die US 2005/0174255 A1.

### Funktelemetrie

Wird eine Funktelemetrie verwendet, so hat man eine Sende-Einheit, die die Messdaten der Temperatursensoren an eine Empfangseinheit mittels Funk überträgt. Hierbei ist eine Versorgung der Sensoren mit Strom notwendig.

### Direkte Übertragung mittels Kabeln

Dieses Verfahren ist alt und fehleranfällig, da die Vorrichtung einer ständigen mechanischen Belastung ausgesetzt ist.

Bei Oberflächenwellen handelt es sich um akustische Köperschallwellen. Diese dehnen sich nur an der Oberfläche und somit nur zweidimensional aus. Auf der Oberfläche von Festkörpern können sich Wellen ausbreiten, welche sowohl einen transversalen als auch einen longitudinalen Anteil haben. Ein Oberflächenpunkt beschreibt beim Wellendurchgang einer solchen Welle eine elliptische Bewegung. Diese Art von Oberflächenwellen hat eine hohe Ausbreitungsgeschwindigkeit wegen des vorhandenen Schubmodules und lässt sich auf der Oberfläche von Festkörpern erzeugen. SAW-Sensoren nutzen die Abhängigkeit der Oberflächenwellengeschwindigkeit von der mechanischen Spannung (Verformung), der Massenbeaufschlagung (Ablagerungen auf der Oberfläche) oder der Temperatur (Temperaturkoeffizient der Schallgeschwindigkeit). SAW-Sensoren messen somit die Variation der Ausbreitungsgeschwindigkeit der akustischen Welle. Eine solche Oberflächenwelle versetzt die Teilchen an der Köper- oder Substratoberfläche senkrecht zur Ausbreitungsrichtung der Welle in elliptische Schwingungen. SAW-Strukturen mit einer angeschlossenen Antenne sind passive Bauteile und geben einen Teil der eingestrahlten Funkwellen über die gleiche Antenne zurück, nachdem das Signal auf der SAW-Struktur gelaufen ist und dort an zwei oder mehreren Strukturen reflektiert wurde. Durch individuell für jedes Bauteil andere Orte dieser Reflektor-Strukturen entstehen dem Bauteil zuordenbare Echos. Der Zeitabstand der Echos eines Bauteils hängt von der Lage der Reflektorstrukturen zueinander sowie von der Schallgeschwindigkeit des Substrates ab. Die Schallgeschwindigkeit ist je nach Substrat und dessen Kristallorientierung überdies mehr oder weniger temperaturabhängig sowie u. a. abhängig von mechanischen Spannungen.

Hierdurch sind diese Oberflächenwellen sensitiv für die Messerfassung elektrischer oder mechanischer Eigenschaften der Körperoberflächen. Die Sensoren, die auf diesem Prinzip beruhen, können somit physikalische Größen wie Temperatur, Druck und Stress gut messen.

Durch eine Anregung der Sensoren im Bereich der Resonanzfrequenz wird die umgebungsbedingungsabhängige Resonanzfrequenz zurückgeben. Diese kann über eine passive Antenne abgestrahlt werden und durch eine Empfangseinheit aufgenommen werden.

Der Sensor kann in der Form ausgelegt sein, dass lediglich die Temperaturinformation durch die Frequenz auslesbar ist oder dass eine weitere Referenzfrequenz ausgesendet wird, die diese Temperaturabhängigkeit nicht aufweist.

Die Nachteile beim heutigen Stand der Technik liegen in dem hohen Aufwand der Applizierung der Sensorik der mechanischen Festigkeit des Aufbaus. Weiterhin kommen, je nach Verfahren, Nachteile bei der Präzision der Messung der Temperatur hinzu sowie ein hoher Aufwand bei Funkübertragungen bezüglich der Sende- und Empfangseinheiten und der Antennenapplizierung.

Ein weiterer Nachteil bei der Verwendung der o. g. Methoden, welche hinreichend genaue Messwerte liefern, sind die hohen Kosten, die mit der Verwendung einhergehen.

Die Aufgabe der Erfindung besteht darin, mit möglicht geringem technischen Aufwand und möglichst geringer Arbeitsintensivität eine Kolbentemperaturmessung durchführen zu können. Die Erfindung soll in der Lage sein, über mehrere Stunden die Temperatur an verschiedenen Stellen der Kolbens erfassen zu können, und dies bei den unterschiedlichen Last- und Arbeitspunkten, die Verbrennungsmotoren aufweisen.

Die Verwendung der SAW-Sensoren zur Messung der Kolbentemperatur Die SAW-Sensoren kommen in unterschiedlicher Form bei Messungen von Temperaturen und Dehnungen zum Einsatz. Eine Verwendung der Sensoren zur Messung von Kolbentemperaturen ist neu.

Ein weiteres Merkmal der Erfindung ist die Verwendung von einem passiven Sensor. Passiv arbeiten bedeutet in diesem Fall, dass der Sensor keine Schaltungen auf Basis von Transistoren, Dioden, Varaktoren, mikromechanischen Schaltern oder ähnlichen verwendet. Die Verwendung eines passiven Sensors hat den Vorteil, dass keine Einspeisung von Energie mit Hilfe einer Spannung oder eines Stromes an der Stelle des Sensors erfolgt. Es ist auch keine Vorrichtung zur Energieeinspeisung notwendig, welche auf dem Prinzip des piezoelektrischen oder thermoelektrischen Effektes beruht. Energie der vom Sensor abgestrahlten Welle wird von dem Sensor aufgenommen durch die von der Sende- und Empfangseinheit abgestrahlte Welle.

Der eingesetzte Sensor nutzt das Prinzip der akustischen Oberflächenwelle für die Messung von Temperaturen, nicht jedoch um Schwingungsvorgänge oder den Körperschall selber zu messen.

Die Erfindung besteht in der Nutzung der SAW-Sensoren für Kolbentemperaturmessungen. Hierzu kommt eine Sende-Empfangseinheit zum Einsatz, welche über eine Antenne in den Raum unter dem zu vermessenden Kolben die Frequenzen einstrahlt, welche der Sensor empfangen kann. Der Sensor wird an den gewünschten Stellen mit SAW-Sensoren versehen. Der Sensor wird an eine Antenne angeschlossen, die die von der Empfangseinheit abgestrahlte Frequenz aufnimmt und im Falle der Resonanz über diese Antenne auch wieder abstrahlt. Die Sende-Empfangseinheit nimmt dieses Signal auf. Die Verschiebung der Resonanzfrequenz des Sensors ist abhängig von der Temperatur an der Stelle des Sensors und ermöglicht somit eine Messung der Temperatur.

Das System ist nicht an eine Messstelle und somit einen Sensor gebunden, sondern kann auf mehrere Sensoren erweitert werden. Diese können gemeinsam eine Antenne zum Empfangen und zum Abstrahlen des Signals nutzen oder auch mit einzelnen Antennen versehen werden.

Ein SAW-Sensor kann auf den Kolben, insbesondere auf den Kolbenboden, geschraubt, geklemmt oder geklebt werden. Weiterhin kann der Sensor in Bohrungen oder erodierte Stellen in das Kolbeninnere eingebracht und dort verklebt werden.

Als Antenne können handelsübliche Stäbantennen, ungeschirmte Kabel oder andere geeignete Geometrien wie z. B. Würfel, Ringe oder fraktale Formen verwendet werden. Dies gilt sowohl für die Antennen der Sende- und Empfangseinheit, sowie für die Antenne des Sensors.

Eine Beschränkung auf einen bestimmten Kolben gibt es bei diesem Verfahren nicht. Ebenfalls ist eine Verwendung der Erfindung für alle Arten von Verbrennungsmotoren geeignet, sowie für den Einsatz bei Hybrid-Technologien, bei denen eine Komponente aus einem Verbrennungsmotor besteht.

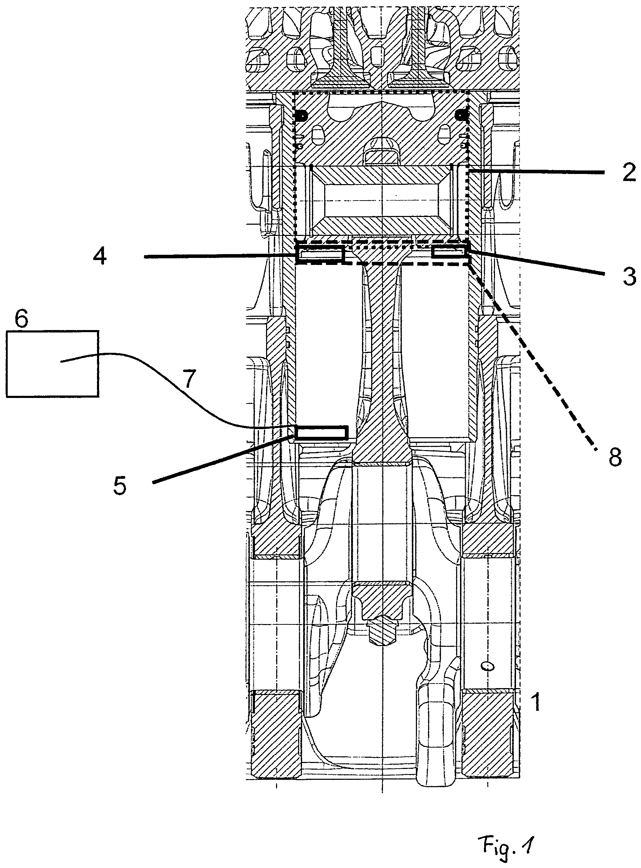

Der Einsatz von SAW-Sensoren ermöglicht es, die Sensoren flexibel an mehreren Stellen am Kolben anzubringen. In der schematischen Darstellung in Figur 1 ist der Bereich, in dem die Sensoren angebracht werden können, mit Dreiecken gekennzeichnet und umfasst den gesamten Bereich des Kolbens. Es sind selbstverständlich, z. B. zur Überwachung des Innenraumes des Motors, auch andere Messstellen denkbar. Unten rechts am Kolben ist der Ort, an dem bei dem dargestellten Ausführungsbeispiel der Sensor platziert ist.

Am Unterboden des Kolbens 2 sind mögliche Positionen für die Anordnung von Sensorantennen 4 am Kolben 2 dargestellt. Auch hier sind weitere Positionen realisierbar, z. B. im den tiefer liegenden Bereichen der Kolbenunterseite. Gepunktet sind die Positionen der Antenne 5 in dem gewählten Versuchsaufbau gekennzeichnet. Die Verbindung zwischen Sensor und Antenne kann über geeignete geschirmte Kabel erfolgen, so dass sowohl für die Sensoren als auch für die Antennen geeignete Positionen gewählt werden können, die weitgehend unabhängig voneinander sind. Die Sende- und Empfangseinheit 6 ist mit der Antenne 5 mittels einer Kommunikationsleitung 7 verbunden.

Gepunktet gekennzeichnet sind die Positionen der am besten geeigneten Plätze der Antennen für die Sende- und Empfangseinheiten zwischen Kolbenunterseite im unteren Totpunkt (UT) und oberhalb der Kurbelwellenwange. Auch hier ist die im Versuch gewählte Position durch ein gepunktetes Rechteck markiert. Die Position der Antenne ist nicht an die markierte Fläche gebunden und sollte an dem Ort mit der besten Übertragungsleistung gewählt werden. Sie ist von den Geometrien des Motors abhängig.

In Figur 1 wird ein Zylinder 1 der Brennkraftmaschine im Schnitt dargestellt. Am im oberen Totpunkt befindlichen Kolben 2 ist ein passiv wirkender SAW-Sensor 3 angeordnet, der mit einer ebenfalls am Kolben 2 befestigten Antenne 4 kommuniziert. Die Antenne 4 übermittelt das Signal des SAW-Sensors 3 an die unterhalb des Kolbens 2 und oberhalb der Kurbelwange angeordneten Antenne 5. Die Antenne 5 leitet das Signal des SAW-Sensors 3 an die Sende- und Empfangseinheit 6, die mit der nicht dargestellten Motorsteuerung der Brennkraftmaschine in Verbindung steht. Der gestrichelte Einbaubereich 8 zeigt die Möglichkeiten der Anordnung für die Antenne am Kolben 4.

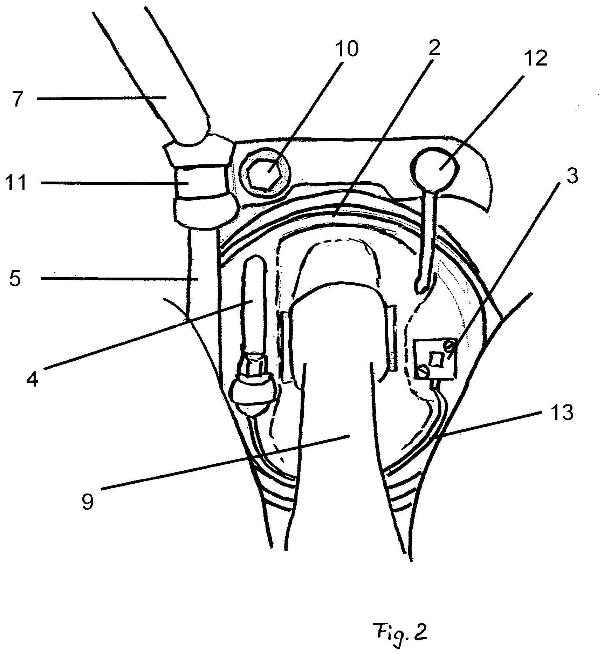

In Figur 2 ist eine mögliche Einbausituation erkennbar. Auf der linken Kolbenunterseite ist die Antenne 4 des SAW-Motors zu erkennen, auf der rechten Seite ist ein SAW-Sensor 3 eingeschraubt und eingeklebt. Die Antenne 5 der Sende- und Empfangseinheit 6 ragt bei diesem Versuchsaufbau über die Kolbenunterseite neben dem Pleuel.

Auf der rechten Unterseite des Kolbens 2 ist der SAW-Sensor 3 neben dem Pleuel 9 mittels Schrauben angeordnet. Mittels eines Antennenkabels 13 ist der SAW-Sensor 3 mit der Antenne 4 am Kolben verbunden. An den nicht beweglichen Teilen des Kurbelgehäuses der Brennkraftmaschine ist die Antenne 5 mittels einer Halterung der Antenne Sende/Empfangseinheit 11 befestigt. Diese Halterung 11 ist mit einer Verschraubung der Einspritzvorrichtung der ÖI-Kolbenkühlung 10 an das Kurbelgehäuse angeschraubt. Die Halterung 11 umfasst auch eine Öleinspritzdüse 12.

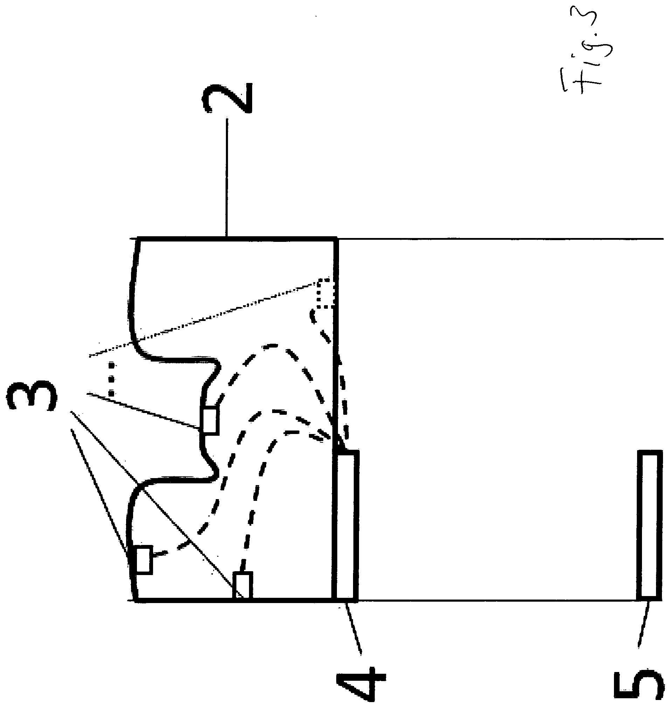

In Figur 3 wird schematisch ein Kolben 2 eines Zylinders einer Brennkraftmaschine gezeigt.

Am Kolben 2 sind mehrere passive SAW-Sensoren 3 angeordnet. Ein SAW-Sensor befindet sich in unmittelbarer Umgebung der Kolbenunterseite. Ein anderer SAW-Sensor befindet sich in unmittelbarer Umgebung der Kolbenlauffläche. Weitere SAW-Sensoren befinden sich in unmittelbarer Umgebung der dem Zylinderkopf zugewandten Kolbenoberseite. Die Antenne 4 am Kolben 2 befindet sich an der Kolbenunterseite.

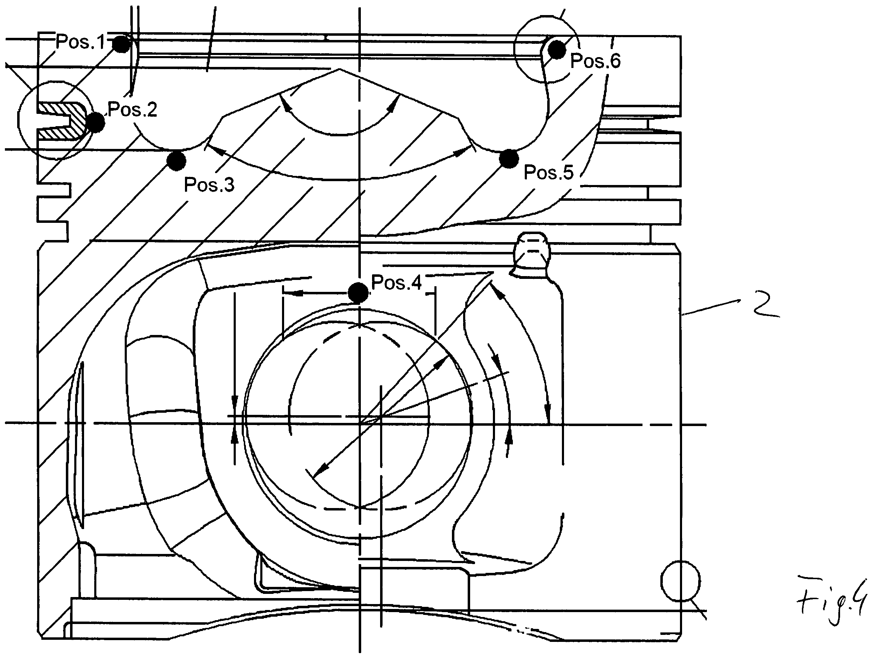

Figur 4 zeigt einen Kolben 2 mit sechs unterschiedlich angeordneten SAW-Sensoren, die mit den Positionsnummern Pos. 1, Pos. 2, Pos. 3, Pos. 4, Pos. 5 und Pos. 6 gekennzeichnet sind. Pos. 1 und Pos. 2 sind am oberen Ende des Kolbens 2 angeordnet. Pos. 3 und Pos. 5 sind in der Kolbenmulde angeordnet. Der SAW-Sensor Pos. 2 ist in unmittelbarer Umgebung eines Kolbenringes angeordnet.

Der SAW-Sensor Pos. 4 ist in unmittelbarer Umgebung eines Kolbenbolzenauges angeordnet."

SAW-Sensoren nutzen die Abhängigkeit der Oberflächenwellengeschwindigkeit von der mechanischen Spannung (Verformung), der Massenbeaufschlagung (Ablagerungen auf der Oberfläche) oder der Temperatur (Temperaturkoeffizient der Schallgeschwindigkeit).

### Bezugszeichen

- 1: Zylinder der Brennkraftmaschine
- 2: Kolben
- 3: passiver SAW-Sensor
- 4: Antenne am Kolben
- 5: Antenne
- 6: Sende- und Empfangseinheit
- 7: Kommunikationsleitung
- 8: Einbaubereich für Sensorantenne
- 9: Pleuel
- 10: Verschraubung Einspritzvorrichtung der Öl-Kolbenkühlung
- 11: Halterung der Antenne Sende/Empfangseinheit
- 12: Öleinspritzdüse
- 13: Antennenkabel SAW-Sensor

## Patentansprüche

1. Brennkraftmaschine mit wenigstens einem Zylinder (1) und wenigstens einem Kolben (2), wobei der Kolben wenigstens einen passiven Sensor (3), und wenigstens eine mit dem Sensor (3) kommunizierende Antenne (4) aufweist, und wenigstens eine Antenne (5), die mit der am Kolben befestigten Antenne kommuniziert, **dadurch gekennzeichnet, dass** der passive Sensor (3) ein SAW-Sensor ist.

2. Brennkraftmaschine nach Anspruch 1 ,
**dadurch gekennzeichnet, dass** der Sensor an der Kolbenunterseite angeordnet ist.

3. Brennkraftmaschine nach Anspruch 1 oder 2,
**dadurch gekennzeichnet, dass** der Sensor in einer Ausnehmung angeordnet ist.

4. Brennkraftmaschine nach einem oder mehreren der vorgenannten Ansprüche,
**dadurch gekennzeichnet, dass** der Sensor geklebt und/oder geschraubt angeordnet ist.

5. Brennkraftmaschine nach einem oder mehreren der vorgenannten Ansprüche,
**dadurch gekennzeichnet, dass** die Antenne (5) im Wesentlichen unterhalb der Kolbenbodenunterseite bei UT angeordnet ist.

6. Verfahren zur Ermittlung vom Messgrößen, im Bereich des Kolbens,
**dadurch gekennzeichnet, dass** eine Vorrichtung nach einem oder mehreren der vorgenannten Ansprüche zum Einsatz kommt.

## Claims

1. Internal combustion engine having at least one cylinder (1) and at least one piston (2), wherein the piston has at least one passive sensor (3) and at least one antenna (4) communicating with the sensor (3), and at least one antenna (5) which communicates with the antenna fastened to the piston, **characterized in that** the passive sensor (3) is a SAW sensor.

2. Internal combustion engine according to Claim 1,
**characterized in that** the sensor is arranged on the underside of the piston.

3. Internal combustion engine according to Claim 1 or 2,
**characterized in that** the sensor is arranged in a recess.

4. Internal combustion engine according to one or more of the preceding claims,
**characterized in that** the sensor is arranged in an adhesively bonded and/or screwed manner.

5. Internal combustion engine according to one or more of the preceding claims,
**characterized in that** the antenna (5) is arranged substantially below the underside of the piston head at bottom dead centre.

6. Method for determining measurement variables in the region of the piston,
**characterized in that** an apparatus according to one or more of the preceding claims is used.

## Revendications

1. Moteur à combustion interne comprenant au moins un cylindre (1) et au moins un piston (2), le piston comportant au moins un capteur passif (3) et au moins une antenne (4) qui communique avec le capteur (3), et au moins une antenne (5) qui communique avec l'antenne fixée au piston, **caractérisé en ce que** le capteur passif (3) est un capteur SAW.

2. Moteur à combustion interne selon la revendication 1,
**caractérisé en ce que** le capteur est disposé sur la face inférieure du piston.

3. Moteur à combustion interne selon la revendication 1 ou 2,
**caractérisé en ce que** le capteur est disposé dans un évidement.

4. Moteur à combustion interne selon une ou plusieurs des revendications précédentes,
**caractérisé en ce que** le capteur est collé et/ou vissé.

5. Moteur à combustion interne selon une ou plusieurs des revendications précédentes,
**caractérisé en ce que** l'antenne (5) est disposée sensiblement sous la face inférieure du fond de piston au point mort inférieur.

6. Procédé de détermination de grandeurs de mesure au niveau du piston,
**caractérisé en ce qu'**un dispositif selon une ou plusieurs des revendications précédentes est utilisé.
